# EUROPÄISCHE PATENTANMELDUNG

(11) **EP 2 660 665 A1**
(43) Veröffentlichungstag der Anmeldung: **06.11.2013**
(21) Anmeldenummer: 12166129.2
(22) Anmeldetag: 30.04.2012
(51) Int. Cl.: G05B 17/02, G05B 19/05

(54) **System zur Simulation von technischen Prozessen in einem industriellen Automatisierungssystem**

(71) Anmelder: Siemens Aktiengesellschaft, 80333 München (DE)
(72) Erfinder: Peschke, Jörn, 90489 Nürnberg (DE); Schwab, Christian, 90459 Nürnberg (DE); Greiner-Jacob, Ralf, 91349 Egloffstein (DE)

(57) **Zusammenfassung**

Zur Simulation von technischen Prozessen in einem industriellen Automatisierungssystem wird die Simulation des technischen Prozesses mittels einer Funktionsblöcke umfassenden Ereignissteuerung durchgeführt. Dabei umfassen die Funktionsblöcke jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Für Signalverbindungen wird ein oberer und unterer Signallaufzeitgrenzwert festgelegt, unter deren Berücksichtigung die Simulation des technischen Prozesses durchgeführt wird.

## Beschreibung

Im Standard IEC 61499 ist eine Architektur zum Entwurf von verteilten industriellen Automatisierungssystemen definiert, die kausale Zusammenhänge zwischen Komponenten von Automatisierungssystemen abbildet. Die im Standard IEC 61499 definierte Architektur basiert auf einer Funktionsblöcke umfassenden Ereignissteuerung, anhand derer technische Prozesse in einem verteilten Automatisierungssystem für dessen funktionalen Entwurf simuliert werden. Ein Funktionsblock umfaßt Ereignis- bzw. Daten-Eingänge, zugeordnete Ereignis - bzw. Daten-Ausgänge, eine Ausführungskontrolleinrichtung (Execution Control Chart - ECC) sowie Steuerungsalgorithmen zur Verarbeitung von Eingangsdaten. Durch die Ausführungskontrolleinrichtung können Ereignisse (Events) mit zugehörigen Daten beispielsweise von einer ersten Ausführungskontrolleinrichtung an eine zweite Ausführungskontrolleinrichtung übertragen werden. Hierdurch wird eine Verarbeitung von der ersten Ausführungskontrolleinrichtung übertragener Daten bzw. deren Ausgabe durch die zweite Ausführungskontrolleinrichtung getriggert.

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Aus V.Vyatkin, H.-M. Hanisch, "Reuse of Components in Formal Modeling and Verification of Distributed Control Systems", 10th IEEE International Conference on Emerging Technologies and Factory Automation (ETFA 2005), Catania, Italien, 19.-22.09.2005 September, Seite 129-134 ist ein Verfahren zur Modellierung und Verifizierung eines Automatisierungssystems bekannt, das auf dem Standard IEC 61499 aufbaut. Durch eine modulare Modellierung von Komponenten eines Automatisierungssystems auf Basis einer objektorientierten Beschreibung wird eine hohe Wiederverwertbarkeitsrate von Modellierungskomponenten erzielt. Dies ermöglicht einen effizienten, fehlerarmen Entwurf von verteilten Automatisierungssystemen.

Der vorliegenden Erfindung liegt die Aufgabe zugrunde, ein System und Verfahren zur Simulation von technischen Prozessen in einem industriellen Automatisierungssystem, das insbesondere bei Nutzung von Fernwirksystemen in verteilten Automatisierungssystemen eine zuverlässige und genaue Zustandsbewertung ermöglicht.

Diese Aufgabe wird erfindungsgemäß durch ein System mit den in Anspruch 1 genannten Merkmalen und durch ein Verfahren mit den in Anspruch 11 genannten Merkmalen gelöst. Vorteilhafte Weiterbildungen der vorliegenden Erfindung sind in den abhängigen Ansprüchen angegeben.

Das erfindungsgemäße System zur Simulation von technischen Prozessen in einem industriellen Automatisierungssystem weist eine Funktionsblöcke umfassende Ereignissteuerung auf. Die Funktionsblöcke umfassen dabei jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Die Ablaufsteuerungseinheiten der Funktionsblöcke können beispielsweise jeweils einen Zustandsautomaten mit durch den jeweiligen Ablaufsteuerungsplan definierbaren Zustandsübergängen umfassen. Darüber hinaus ist eine Schwellwertdefinitionseinheit vorgesehen, die zur Festlegung eines oberen und unteren Signallaufzeitgrenzwerts für Signalverbindungen ausgestaltet und eingerichtet ist. Die oberen und unteren Signallaufzeitgrenzwerte für die Signalverbindungen zwischen den Funktionsblöcken sind vorzugsweise in einer der Ereignissteuerung zugeordneten Schwellwertspeichereinheit gespeichert.

Mit dem erfindungsgemäßen System können bei einem beispielsweise auf dem Standard IEC 61499 aufbauenden Entwurf von Steuerungsanwendung für industrielle Automatisierungssysteme zeitliche Aspekte einer Signalübertragung zwischen Funktionsblöcken berücksichtigt werden. Insbesondere bei einer Nutzung von Fernwirksystemen ist dies äußerst wichtig. Da Kommunikation in Fernwirksystemen über weite Strecken erfolgt, treten hier nicht zu vernachlässigende Signallaufzeiten auf, die deutlich über denen in lokalen Systemen liegen. Zudem wird für eine Realisierung von Fernwirksystemen häufig auf öffentliche Netzinfrastruktur, wie Mobilfunknetze oder Internet, mit eher geringen Datenübertragungsraten bzw. hohen Antwortzeiten zurückgegriffen. Dies trägt grundsätzlich zu einer Verschärfung obiger Problematik ein. Mit der vorliegenden Erfindung können derartige Effekte systematisch erkannt und robuste Regelungssysteme realisiert werden.

Entsprechend einer vorteilhaften Weiterbildung des erfindungsgemäßen Systems ist die Schwellwertdefinitionseinheit zur Festlegung eines für jede Signalverbindung individuellen oberen und unteren Signallaufzeitgrenzwerts ausgestaltet und eingerichtet. Des weiteren kann der obere oder untere Signallaufzeitgrenzwert ein uneigentlicher Grenzwert sein, so daß durch den oberen und unteren Signallaufzeitgrenzwert ein halboffenes Intervall definiert ist.

Ein Funktionsblock kann beispielsweise einem durch den Funktionsblock zumindest teilweise modellierten Automatisierungsgerät innerhalb des industriellen Automatisierungssystems zugeordnet sein. Vorzugsweise sind für Signalverbindungen zwischen zwei Funktionsblöcken, die demselben Automatisierungsgerät zugeordnet sind, verschwindende obere und untere Signallaufzeitgrenzwerte definiert. Entsprechend einer weiteren vorteilhaften Ausgestaltung der erfindungsgemäßen Systems sind auch für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert. Vorteilhafterweise sind nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert. Dies ermöglicht einen relativ geringen zusätzlichen Modellierungsaufwand, ohne dabei jedoch gravierende Einschränkungen hinsichtlich Genauigkeit von Simulationsergebnissen in weit verteilten Automatisierungssystemen zu machen.

Entsprechend einer besonders bevorzugten Ausgestaltung des erfindungsgemäßen Systems ist der Ereignissteuerung eine Überprüfungseinheit zugeordnet, die für eine Durchführung einer Simulation des technischen Prozesses unter Vorgabe der oberen Signallaufzeitgrenzwerte und für eine Durchführung einer Simulation des technischen Prozesses unter Vorgabe der unteren Signallaufzeitgrenzwerte ausgestaltet und eingerichtet ist. Dies ermöglicht bei handhabbarem Simulationsaufwand eine hinreichend genaue Abschätzung einer Auswirkung von Signallaufzeiten in einem verteilten Automatisierungssystem.

Beim erfindungsgemäßen Verfahren zur Simulation von technischen Prozessen in einem industriellen Automatisierungssystem wird die Simulation des technischen Prozesses mittels einer Funktionsblöcke umfassenden Ereignissteuerung durchgeführt wird. Dabei umfassen die Funktionsblöcke jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Durch einen Ablaufsteuerungsplan werden beispielsweise jeweils Zustandsübergänge eines Zustandsautomaten definiert, der von einer Ablaufsteuerungseinheit eines Funktionsblocks umfaßt ist. Darüber hinaus wird für Signalverbindungen ein oberer und unterer Signallaufzeitgrenzwert festgelegt, unter deren Berücksichtigung die Simulation des technischen Prozesses durchgeführt wird. Die oberen und unteren Signallaufzeitgrenzwerte für die Signalverbindungen zwischen den Funktionsblöcken können beispielsweise in einer der Ereignissteuerung zugeordneten Schwellwertspeichereinheit gespeichert werden. Vorzugsweise wird für jede Signalverbindung ein individueller oberer und unterer Signallaufzeitgrenzwert festgelegt. Insgesamt ermöglicht das erfindungsgemäße Verfahren eine schnelle und relativ einfache Ermittlung von Laufzeiteffekten bei einer Interaktion zwischen über weite Distanzen voneinander entfernten Komponenten eines industriellen Automatisierungssystems.

Durch den oberen und unteren Signallaufzeitgrenzwert kann grundsätzlich ein halboffenes Intervall definiert werden, indem für den oberen oder unteren Signallaufzeitgrenzwert ein uneigentlicher Grenzwert vorgegeben wird. Entsprechend einer weiteren vorteilhaften Ausgestaltung des erfindungsgemäßen Verfahrens wird durch einen Funktionsblock ein Automatisierungsgerät innerhalb des industriellen Automatisierungssystems zumindest teilweise modelliert. Wird beispielsweise pro Funktion eines Automatisierungsgeräts ein Funktionsblock modelliert, ist eine einfache Ableitung einer Modellierung für ähnliche Automatisierungsgeräte möglich, indem auf zuvor erstellte Funktionsblöcke für im wesentlichen identische Teilfunktionen zurückgegriffen wird.

Vorzugsweise werden für Signalverbindungen zwischen zwei Funktionsblöcken, die demselben Automatisierungsgerät zugeordnet sind, verschwindende obere und untere Signallaufzeitgrenzwerte definiert. In entsprechender Weise gilt dies auch für Signalverbindungen zwischen zwei Funktionsblöcken, die Automatisierungsgeräten innerhalb desselben lokalen Kommunikationsnetzes zugeordnet sind. Entsprechend einer bevorzugten Weiterbildung des erfindungsgemäßen Verfahrens werden nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert.

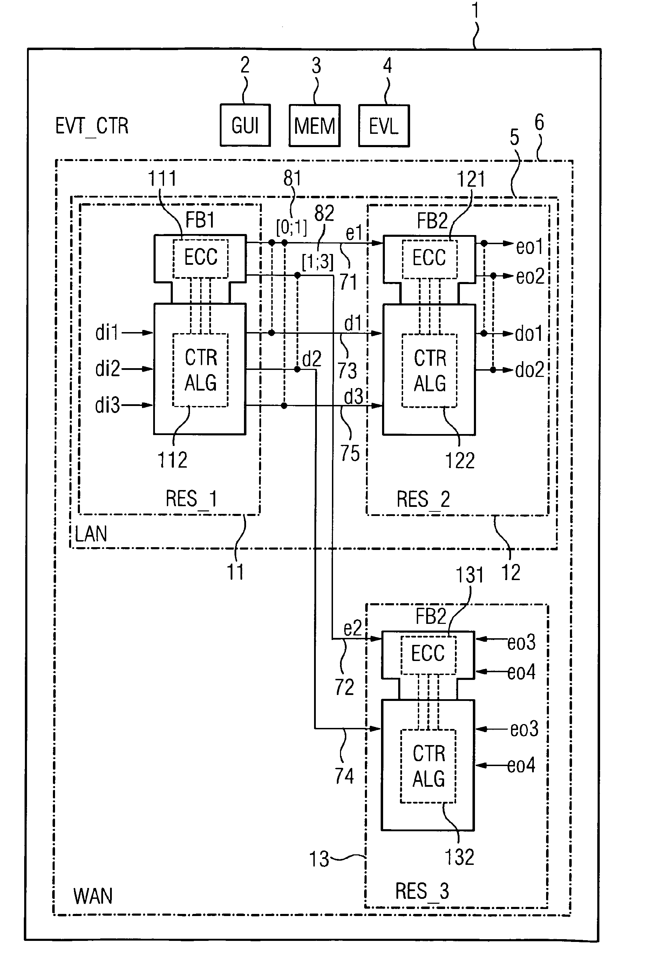

Der Ereignissteuerung ist entsprechend einer weiteren Ausgestaltung des erfindungsgemäßen Verfahrens eine Überprüfungseinheit zugeordnet ist, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird. Dies ermöglicht eine relativ einfache und effiziente Abschätzung von Laufzeiteffekten in einem verteilten Automatisierungssystem. Die vorliegende Erfindung wird nachfolgend an einem Ausführungsbeispiel anhand der Zeichnung näher erläutert. Es zeigt die
- Figur: eine schematische Darstellung eines Systems zur Simulation von technischen Prozessen in einem industriellen Automatisierungssystem.

Das in der Figur dargestellte System zur Simulation von technischen Prozessen in einem industriellen Automatisierungssystem weist eine mehrere Funktionsblöcke 11-13 umfassenden Ereignissteuerung 1 auf. Im vorliegenden Ausführungsbeispiel wird durch einen ersten Funktionsblock 11 ein Sensor innerhalb des industriellen Automatisierungssystems modelliert, während ein zweiter und dritter Funktionsblock 12, 13 jeweils ein Anzeigegerät modellieren. Der Sensor und ein erstes Anzeigegerät sind innerhalb eines lokalen Kommunikationsnetzes 4 miteinander verbunden, während der Sensor und ein zweites Anzeigegerät, das beispielsweise einer entfernten Warte zugeordnet ist, innerhalb eines Weitverkehrsnetzes 5 miteinander verbunden sind. An einer der Ereignissteuerung 1 zugeordneten graphischen Benutzerschnittstelle 2 sind der erste und zweite Funktionsblock 11, 12 dementsprechend als durch ein lokales Kommunikationsnetz 4 umfaßt dargestellt. Alle drei Funktionsblöcke 11-13 sind zusätzlich durch ein Weitverkehrsnetz 5 umfaßt dargestellt.

Im vorliegenden Ausführungsbeispiel mißt der Sensor in seiner Umgebung Temperatur (di1), Luftdruck (di2), und Luftfeuchtigkeit (di3). An einem ersten Ereignis-Ausgang stellt der Sensor ein erstes Ereignissignal (e1), das Informationen über Temperatur (d1) und Luftfeuchtigkeit (d3) umfaßt, für das erste Anzeigegerät bereit. Zusätzlich stellt der Sensor an einem zweiten Ereignis-Ausgang ein zweites Ereignissignal (e2), das Informationen über den Luftdruck (d2) umfaßt, für das zweite Anzeigegerät bereit.

Jeder Funktionsblock 11-13 umfaßt im vorliegenden Ausführungsbeispiel jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit 112, 122, 132 und einen veränderbaren von der Ablaufsteuerungseinheit 112, 122, 132 verarbeitbaren Ablaufsteuerungsplan 111, 121, 131. Verknüpfungen zwischen den Funktionsblöcken 11-13 sind entsprechend obiger Bereitstellung der beiden Ereignissignale (e1, e2) durch Signalverbindungen 71-75 realisiert. Die Ablaufsteuerungseinheiten 112, 122, 132 der Funktionsblöcke 11-13 umfassen jeweils einen Zustandsautomaten mit durch den jeweiligen Ablaufsteuerungsplan 111, 121, 131 definierbaren Zustandsübergängen.

Durch die der Ereignissteuerung zugeordnete graphische Benutzerschnittstelle 2 ist eine Schwellwertdefinitionseinheit realisiert, mittels derer für die Signalverbindungen 71-75 ein oberer und unterer Signallaufzeitgrenzwert festgelegt wird. Unter Berücksichtigung dieser Signallaufzeitgrenzwerte wird die Simulation des technischen Prozesses durchgeführt. Der obere und untere Signallaufzeitgrenzwert definieren für eine Signalverbindung jeweils ein Zeitintervall 81, 82, innerhalb dessen ein Datenaustausch abgeschlossen ist. Die oberen und unteren Signallaufzeitgrenzwerte für die Signalverbindungen 71-75 zwischen den Funktionsblöcken 11-13 werden in einer der Ereignissteuerung 1 zugeordneten Schwellwertspeichereinheit 3 gespeichert. Darüber hinaus ist der Ereignissteuerung 1 eine Überprüfungseinheit 4 zugeordnet, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird.

Im vorliegenden Ausführungsbeispiel ist ein solches Zeitintervall 81, 82 jeweils für die Signalverbindungen 71, 72 definiert, über welche das erste und zweite Ereignissignal (e1, e2) bereitgestellt werden. Angaben in der Figur sind dabei auf 1 Sekunde normiert.

Grundsätzlich können für die Zeitintervalle 81, 82 folgende Definitionen gemacht werden:
- [x; y], wenn ein Datenaustausch frühestens nach x Sekunden, spätestens jedoch nach y Sekunden abgeschlossen ist;
- [0; x], wenn ein Datenaustausch sofort oder spätestens innerhalb von x Sekunden abgeschlossen ist;
- [x; ∞], wenn ein Datenaustausch frühestens nach x Sekunden abgeschlossen ist;
- [x; ∞], wenn ein Datenaustausch zu einem unbestimmten Zeitpunkt abgeschlossen ist.

Entsprechend der Figur wird das erste Ereignissignal (e1) also sofort oder spätestens innerhalb von einer Sekunde an das erste Anzeigegerät bereitgestellt, während das zweite Ereignissignal (e2) frühestens nach einer Sekunde und spätestens nach drei Sekunden an das zweite Anzeigegerät bereitgestellt wird. Grundsätzlich könnten entsprechend einer anderen Ausgestaltung für Signalverbindungen zwischen zwei Funktionsblöcken, die demselben Automatisierungsgerät zugeordnet sind, verschwindende obere und untere Signallaufzeitgrenzwerte definiert werden. Dies kann auch für Signalverbindungen zwischen zwei Funktionsblöcken gelten, die Automatisierungsgeräten innerhalb desselben lokalen Kommunikationsnetzes zugeordnet sind. In entsprechender Weise können nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert sein.

## Patentansprüche

1. System zur Simulation von technischen Prozessen in einem industriellen Automatisierungssystem mit
- einer Funktionsblöcke umfassenden Ereignissteuerung, wobei die Funktionsblöcke jeweils zumindest einen Ereignis-und/oder Daten-Eingang zur Aufnahme von Eingangssignalen, zumindest einen Ereignis- und/oder Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan umfassen, und wobei Verknüpfungen zwischen Funktionsblöcken durch Signalverbindungen realisiert sind,
- einer Schwellwertdefinitionseinheit, die zur Festlegung eines oberen und unteren Signallaufzeitgrenzwerts für Signalverbindungen ausgestaltet und eingerichtet ist.

2. System nach Anspruch 1,
bei dem die Ablaufsteuerungseinheiten der Funktionsblöcke jeweils einen Zustandsautomaten mit durch den jeweiligen Ablaufsteuerungsplan definierbaren Zustandsübergängen umfaßt.

3. System nach einem der Ansprüche 1 oder 2,
bei dem die Schwellwertdefinitionseinheit zur Festlegung eines für jede Signalverbindung individuellen oberen und unteren Signallaufzeitgrenzwerts ausgestaltet und eingerichtet ist.

4. System nach einem der Ansprüche 1 bis 3,
bei dem der obere oder untere Signallaufzeitgrenzwert ein uneigentlicher Grenzwert ist, wobei durch den oberen und unteren Signallaufzeitgrenzwert ein halboffenes Intervall definiert ist.

5. System nach einem der Ansprüche 1 bis 4,
bei dem die oberen und unteren Signallaufzeitgrenzwerte für die Signalverbindungen zwischen den Funktionsblöcken in einer der Ereignissteuerung zugeordneten Schwellwertspeichereinheit gespeichert sind.

6. System nach einem der Ansprüche 1 bis 5,
bei dem ein Funktionsblock einem durch den Funktionsblock zumindest teilweise modellierten Automatisierungsgerät innerhalb des industriellen Automatisierungssystems zugeordnet ist.

7. System nach Anspruch 6,
bei dem für Signalverbindungen zwischen zwei Funktionsblöcken, die demselben Automatisierungsgerät zugeordnet sind, verschwindende obere und untere Signallaufzeitgrenzwerte definiert sind.

8. System nach einem der Ansprüche 6 oder 7,
bei dem für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert sind.

9. System nach einem der Ansprüche 6 bis 8,
bei dem nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert sind.

10. System nach einem der Ansprüche 1 bis 9,
bei dem der Ereignissteuerung eine Überprüfungseinheit zugeordnet ist, die für eine Durchführung einer Simulation des technischen Prozesses unter Vorgabe der oberen Signallaufzeitgrenzwerte und für eine Durchführung einer Simulation des technischen Prozesses unter Vorgabe der unteren Signallaufzeitgrenzwerte ausgestaltet und eingerichtet ist.

11. Verfahren zur Simulation von technischen Prozessen in einem industriellen Automatisierungssystem, bei dem
- die Simulation des technischen Prozesses mittels einer Funktionsblöcke umfassenden Ereignissteuerung durchgeführt wird, wobei die Funktionsblöcke jeweils zumindest einen Ereignis- und/oder Daten-Eingang zur Aufnahme von Eingangssignalen, zumindest einen Ereignis- und/oder Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan umfassen, und wobei Verknüpfungen zwischen Funktionsblöcken durch Signalverbindungen realisiert sind,
- für Signalverbindungen ein oberer und unterer Signallaufzeitgrenzwert festgelegt wird, unter deren Berücksichtigung die Simulation des technischen Prozesses durchgeführt wird.

12. Verfahren nach Anspruch 11,
bei dem durch einen Ablaufsteuerungsplan jeweils Zustandsübergänge eines Zustandsautomaten definiert werden, der von einer Ablaufsteuerungseinheit eines Funktionsblocks umfaßt ist.

13. Verfahren nach einem der Ansprüche 11 oder 12,
bei dem für jede Signalverbindung ein individueller oberer und unterer Signallaufzeitgrenzwert festgelegt wird.

14. Verfahren nach einem der Ansprüche 11 bis 13,
bei dem der obere oder untere Signallaufzeitgrenzwert ein uneigentlicher Grenzwert ist, wobei durch den oberen und unteren Signallaufzeitgrenzwert ein halboffenes Intervall definiert wird.

15. Verfahren nach einem der Ansprüche 11 bis 14,
bei dem die oberen und unteren Signallaufzeitgrenzwerte für die Signalverbindungen zwischen den Funktionsblöcken in einer der Ereignissteuerung zugeordneten Schwellwertspeichereinheit gespeichert werden.

16. Verfahren nach einem der Ansprüche 11 bis 15,
bei dem durch einen Funktionsblock ein Automatisierungsgerät innerhalb des industriellen Automatisierungssystems zumindest teilweise modelliert wird.

17. Verfahren nach Anspruch 16,
bei dem für Signalverbindungen zwischen zwei Funktionsblöcken, die demselben Automatisierungsgerät zugeordnet sind, verschwindende obere und untere Signallaufzeitgrenzwerte definiert werden.

18. Verfahren nach einem der Ansprüche 16 oder 17,
bei dem für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert werden.

19. Verfahren nach einem der Ansprüche 16 bis 18,
bei dem nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert werden.

20. Verfahren nach einem der Ansprüche 10 bis 19,
bei dem der Ereignissteuerung eine Überprüfungseinheit zugeordnet ist, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird.
